# EUROPÄISCHE PATENTANMELDUNG

(11) **EP 3 770 035 A1**
(43) Veröffentlichungstag der Anmeldung: **27.01.2021**
(21) Anmeldenummer: 20182388.7
(22) Anmeldetag: 25.06.2020
(51) Int. Cl.: B60W 40/08, G06N 20/00

(54) **ERKENNUNG VON HANDS-OFF-SITUATIONEN DURCH MASCHINELLES LERNEN**

(30) Priorität: 25.07.2019 DE 102019211016
(71) Anmelder: VOLKSWAGEN AG, 38440 Wolfsburg (DE)
(72) Erfinder: Eigel, Thomas, 13585 Berlin (DE); Stahl, Felix, 38106 Braunschweig (DE)

(57) **Zusammenfassung**

Die Erfindung betrifft ein Verfahren zur Erstellung von Trainingsdaten (40), die geeignet sind, ein Fahrerassistenzsystem (12; 48) auf Basis eines lernfähigen Algorithmus (44) zur Erkennung einer Hands-off-Situation (54) in einem Fahrzeug (10; 46) zu trainieren, umfassen folgende Schritte:

- Fahren eines Fahrzeugs (10), das mit einem Fahrerassistenzsystem (12) ausgestattet ist, das während des Fahrens sensorisch Lenkmomentdaten (16) erfasst und zusätzlich zumindest Abstandsdaten (20) von Händen (22) eines Fahrers (24) zum Lenkrad (26) erfasst;
- Erkennung von Hands-off-Situationen (54) zumindest aus den gemessenen Abstandsdaten (20);
- Verknüpfen der erkannten Hands-off-Situationen (54) mit den Lenkmomentdaten (16) im Zeitraum der erkannten Hands-off-Situationen (54), um gelabelte Lenkmomentdaten (38) als Trainingsdaten (40) zu erstellen.

Die Erfindung betrifft weiterhin einen Datenträger, ein Verfahren zum Trainieren eines lernfähigen Algorithmus, ein Verfahren zum Betrieb eines Fahrerassistenzsystems, ein Fahrerassistenzsystem und ein Fahrzeug.

## Beschreibung

Die Erfindung betrifft ein Verfahren zur Erstellung von Trainingsdaten gemäß dem Oberbegriff des Patentanspruchs 1, einen Datenträger gemäß dem Oberbegriff des Patentanspruchs 4, ein Verfahren zum Trainieren eines lernfähigen Algorithmus gemäß dem Oberbegriff des Patentanspruchs 5, einen Datenträger gemäß dem Oberbegriff des Patentanspruchs 6, ein Verfahren zum Betrieb eines Fahrerassistenzsystems gemäß dem Oberbegriff des Patentanspruchs 7, ein Fahrerassistenzsystem gemäß dem Oberbegriff des Patentanspruchs 8 sowie ein Fahrerassistenzsystem gemäß dem Oberbegriff des Patentanspruchs 9 und ein Fahrzeug gemäß dem Oberbegriff des Patentanspruchs 10.

Auf dem technischen Gebiet der Fahrzeuge, insbesondere Kraftfahrzeuge, stellt die Überwachung der Lenkaktivität eines Fahrers eine bekannte Aufgabenstellung dar. Aus der Lenkaktivität können verschiedenste sicherheitstechnische Schlussfolgerungen gezogen werden. Einen besonders wichtigen Aspekt bildet dabei die Erkennung von Hands-off-Situationen, also Momenten, in denen der Fahrer seine Hände nicht am Lenkrad hat.

Bekannt ist dabei, beispielsweise Lenkmomentverläufe auszuwerten und analytisch auf Hinweise zu untersuchen, dass eine Hands-off-Situation vorliegt. Allerdings sind solche Ansätze nur bedingt zuverlässig und genau.

Es ist auch bekannt, beispielsweise kapazitive Abstandssensoren zu verwenden, um die Hands-off-Situation direkt zu messen. Solche Lösungen sind hochgenau, jedoch auch mit großem technischen Aufwand verbunden.

Die US 9,604,649 B1 beschreibt beispielsweise ein Verfahren zur Überprüfung, ob ein Fahrer seine Hände am Lenkrad eines Fahrzeugs hat. Dazu wird ein Störsignal, beispielsweise ein Rütteln, am Lenkrad erzeugt und ein Lenkmoment gemessen.

In der DE 10 2008 042 277 A1 wird ein Verfahren beschrieben, in dem Lenkmomentverläufe mit einem Machine-Learning-Ansatz, beispielsweise einem neuronalen Netz, auf spezielle Eigenschaften untersucht werden, die auf eine Hand-am-Lenkrad- oder Hand-nicht-am-Lenkrad-Situation hinweisen.

Aus der US 2004/0039509 A1 ist ein System zur Kontrolle eines Insassenrückhaltesystems bekannt, das mit einem Machine-Learning-Ansatz arbeitet.

Solche machine-learning-basierten Lösungen haben allerdings den Schwachpunkt in der Herstellung und Validität der Trainingsdaten. Die Herstellung der Trainingsdaten ist äußerst aufwendig, da eine äußerst große Anzahl möglicher Lenkmomentverläufe mit der Information verknüpft werden muss, ob ihnen eine Hands-off-Situation zugrunde liegt oder nicht. Man spricht hier auch vom "Labeln" der Lenkmomentverläufe. Auch ist beim manuellen Labeln kein einheitliches Bewertungskriterium dafür gegeben, wo die Grenze zwischen Hands-off-Situation und Hands-on-Situation zu ziehen ist.

Der Erfindung liegt nun die Aufgabe zugrunde, einen verbesserten Machine-Learning-Ansatz zu finden, um die genannten Probleme zu lösen.

Die Aufgabe wird durch die Gegenstände der unabhängigen Patentansprüche 1, 4, 5, 6, 7, 8, 9 und 10 gelöst. Weitere bevorzugte Ausgestaltungen der Erfindung ergeben sich aus den übrigen, in den Unteransprüchen genannten Merkmalen.

Ein erster Aspekt der Erfindung betrifft ein Verfahren zur Erstellung von Trainingsdaten, die geeignet sind, ein Fahrerassistenzsystem auf Basis eines lernfähigen Algorithmus zur Erkennung einer Hands-off-Situation in einem Fahrzeug zu trainieren, umfassen folgende Schritte:
- Fahren eines Fahrzeugs, das mit einem Fahrerassistenzsystem ausgestattet ist, das während des Fahrens sensorisch Lenkmomentdaten erfasst und zusätzlich zumindest Abstandsdaten von Händen eines Fahrers zum Lenkrad erfasst;
- Erkennung von Hands-off-Situationen zumindest aus den gemessenen Abstandsdaten;
- Verknüpfen der erkannten Hands-off-Situationen mit den Lenkmomentdaten im Zeitraum der erkannten Hands-off-Situationen, um gelabelte Lenkmomentdaten als Trainingsdaten zu erstellen.

Die sensorisch hochgenau erfassten Abstandsdaten der Händen zum Lenkrad können als eindeutige Informationsbasis darüber verwendet werden, ob eine Hands-off-Situation vorliegt. Der Fachmann kann dazu einmalig einen Schwellwert eines Signalpegels des verwendeten Sensors festlegen. Jedes Mal, wenn der Schwellwert beispielsweise unterschritten wird, kann automatisch eine Bewertung dahingehend erfolgen, dass eine Hands-off-Situation vorliegt. Diese Bewertung kann beispielsweise unter Verwendung von Zeitstempeln mit den gemessenen Lenkmomentdaten synchronisiert werden. Somit ist der Zeitraum des Bestehens der Hands-off-Situation eindeutig demselben Zeitraum im Signalverlauf des Lenkmoments zuordenbar.

Durch das Fahren des Fahrzeugs können somit automatisiert beliebige Mengen an Trainingsdaten unter Realbedingungen erzeugt werden. Die Bewertung der Hands-off-Situation erfolgt dabei einheitlich und reproduzierbar.

In bevorzugter Ausgestaltung des Verfahrens der Erfindung ist vorgesehen, dass zur Erfassung der Abstandsdaten ein kapazitiver Abstandssensor verwendet wird.

Derartige Sensoren sind hochgenau und lassen sich auch im Lenkrad gut integrieren.

In weiterhin bevorzugter Ausgestaltung des Verfahrens der Erfindung ist vorgesehen, dass zur Erkennung der Hands-off-Situationen zusätzliche Daten herangezogen werden, aus der Gruppe: Lenkradbewegungsdaten; Fahrbahnverlaufsdaten; Spurerkennungsdaten; Fahrzeugbewegungsdaten.

Somit können die Abstandsdaten des Abstandssensors zusätzlich zu dem festgelegten Schwellwert mit ergänzenden Informationsquellen auf Hands-off-Situationen untersucht werden, um beispielsweise im Bereich um den Schwellwert herum die Validität der Erkennung zu erhöhen.

Nochmals mit anderen Worten zusammengefasst betrifft die Erfindung ein Verfahren zur automatisierten Herstellung von gelabelten Lenkmomentdaten, mit denen eine KI-Einheit trainiert werden kann, um dann im Fahrbetrieb Hands-off-Situationen zu erkennen.

Ein weiterer Aspekt der Erfindung betrifft einen Datenträger, auf dem Trainingsdaten, hergestellt in einem erfindungsgemäßen Verfahren zur Erstellung von Trainingsdaten gemäß der vorhergehenden Beschreibung, gespeichert sind. Der Datenträger wird im Folgenden auch als Trainingsdatenträger bezeichnet.

Bei dem Datenträger kann es sich um beliebige Datenträger handeln, vorzugsweise um digitale Datenträger, wie beispielsweise Flashspeichermedien.

Ein weiterer Aspekt der Erfindung betrifft ein Verfahren zum Trainieren eines lernfähigen Algorithmus, in dem Trainingsdaten, hergestellt in einem erfindungsgemäßen Verfahren zur Erstellung von Trainingsdaten gemäß der vorhergehenden Beschreibung oder gespeichert auf einem erfindungsgemäßen Trainingsdatenträger gemäß der vorhergehenden Beschreibung, verwendet werden.

Der lernfähige Algorithmus kann beispielsweise ein neuronales Netz umfassen, das die gelabelten Lenkmomentverläufe zu Lernzwecken verarbeitet.

Ein weiterer Aspekt der Erfindung betrifft einen Datenträger, auf dem ein lernfähiger Algorithmus gespeichert ist, der in einem erfindungsgemäßen Verfahren gemäß der vorhergehenden Beschreibung trainiert worden ist. Der Datenträger wird im Folgenden auch als Algorithmus-Datenträger bezeichnet.

Ein weiterer Aspekt der Erfindung betrifft ein Verfahren zum Betrieb eines Fahrerassistenzsystems, in dem auf Basis eines lernfähigen Algorithmus eine Hands-off-Situation in einem Fahrzeug erkannt wird, umfassen folgende Schritte:
- Fahren eines Fahrzeugs, das mit einem Fahrerassistenzsystem ausgestattet ist, das während des Fahrens sensorisch Lenkmomentdaten erfasst;
- Erkennung von Hands-off-Situationen aus den gemessenen Lenkmomentdaten unter Verwendung eines trainierten lernfähigen Algorithmus.

Erfindungsgemäß ist vorgesehen, dass der trainierte lernfähige Algorithmus
- anhand von Trainingsdaten, hergestellt in einem erfindungsgemäßen Verfahren zur Erstellung von Trainingsdaten gemäß der vorhergehenden Beschreibung, trainiert worden ist; oder
- unter Verwendung eines erfindungsgemäßen Trainingsdatenträgers gemäß der vorhergehenden Beschreibung trainiert worden ist; oder
- in einem erfindungsgemäßen Verfahren zum Trainieren eines lernfähigen Algorithmus gemäß der vorhergehenden Beschreibung trainiert worden ist; oder
- auf einem erfindungsgemäßen Algorithmus-Datenträger gemäß der vorhergehenden Beschreibung gespeichert ist.

Das Fahrerassistenzsystem liefert dem trainierten lernfähigen Algorithmus also die gemessenen nicht gelabelten Lenkmomentdaten als Input, woraufhin der anhand der gelabelten Lenkmomentdaten trainierte lernfähigen Algorithmus bewertet, ob eine Hands-off-Situation vorliegt.

Die Güte der Erkennung ist in dem erfindungsgemäßen Verfahren gegenüber konventionellen Verfahren massiv erhöht, ohne dabei großen technischen Aufwand vorauszusetzen.

Insbesondere kann in dem Fahrzeug, das die Hands-off-Situationen während der Nutzung durch einen Verbraucher erkennen soll, auf einen Abstandssensor für die Hände verzichtet werden.

Ein weiterer Aspekt der Erfindung betrifft ein Fahrerassistenzsystem, ausgebildet zur Durchführung eines erfindungsgemäßen Verfahrens zur Erstellung von Trainingsdaten gemäß der vorhergehenden Beschreibung oder zur Erstellung eines erfindungsgemäßen Trainingsdatenträgers gemäß der vorhergehenden Beschreibung oder zur Durchführung eines erfindungsgemäßen Verfahrens zum Trainieren eines lernfähigen Algorithmus gemäß der vorhergehenden Beschreibung oder zur Erstellung eines erfindungsgemäßen Algorithmus-Datenträgers gemäß der vorhergehenden Beschreibung.

Ein weiterer Aspekt der Erfindung betrifft ein Fahrerassistenzsystem, ausgebildet zur Durchführung eines erfindungsgemäßen Verfahrens zum Betrieb eines Fahrerassistenzsystems, in dem auf Basis eines trainierten lernfähigen Algorithmus eine Hands-off-Situation in einem Fahrzeug erkannt wird gemäß der vorhergehenden Beschreibung.

Ein weiterer Aspekt der Erfindung betrifft ein Fahrzeug, umfassend ein erfindungsgemäßes Fahrerassistenzsystem gemäß der vorhergehenden Beschreibung.

Das Fahrzeug kann vorzugsweise ein Kraftfahrzeug, besonders bevorzugt ein Automobil oder Lastkraftwagen sein.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein erfindungsgemäßes Fahrzeug in einem erfindungsgemäßen Verfahren zur Erstellung von Trainingsdaten; und
- Figur 2: ein erfindungsgemäßes Fahrzeug in einem erfindungsgemäßen Verfahren zur Erkennung einer Hands-off-Situation.

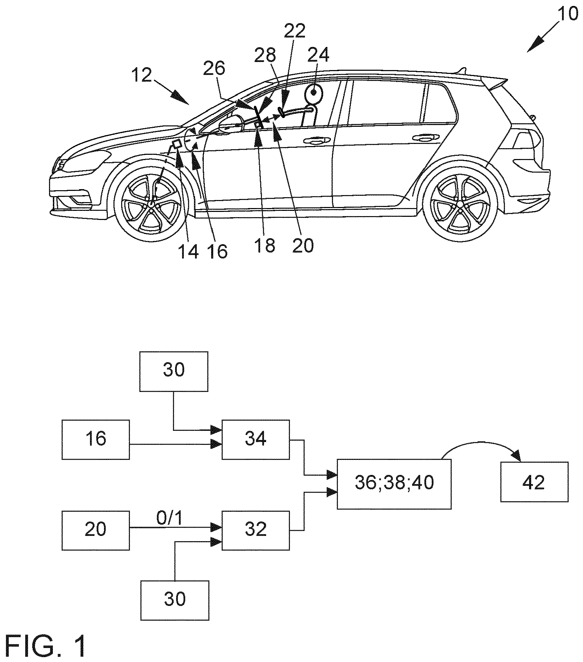

Figur 1 zeigt ein erfindungsgemäßes Fahrzeug 10 mit einem erfindungsgemäßen Fahrerassistenzsystem 12.

Das Fahrerassistenzsystem 12 umfasst verschiedene im Fahrzeug 10 verteilte Komponenten. Die Komponenten umfassen einen Lenkmomentsensor 14, der Lenkmomentdaten 16 messen kann. Außerdem umfasst das Fahrerassistenzsystem 12 einen kapazitiven Abstandssensor 18, der Abstandsdaten 20 zwischen Händen 22 eines Fahrers 24 und einem Lenkrad 26 des Fahrzeugs 10 messen kann.

Das Fahrerassistenzsystem 12 kann in einem erfindungsgemäßen Verfahren wie folgt betrieben werden.

Während das Fahrzeug 10 fährt, werden die Lenkmomentdaten 16 mit dem Lenkmomentsensor 14 erfasst und auch die Abstandsdaten 20 werden durch den Abstandssensor 18 erfasst. Dieser Ausgangszustand ist unterhalb des Fahrzeugs 10 als Blockschema dargestellt.

Aus den gemessenen Abstandsdaten 20 werden in bekannter Weise Hands-off-Situationen ermittelt. Beispielsweise kann eine Hands-off-Situation erkannt werden und durch eine logische Eins codiert werden, wenn die Hände 22 des Fahrers 24 weiter vom Abstandssensor 18 entfernt sind, als sich ein Abstand vom Abstandssensor 18 zur Oberfläche 28 des Lenkrads 26 bemisst. Andernfalls kann durch eine logische Null codiert werden, dass keine Hands-off-Situation vorliegt.

Im Blockschema ist angedeutet, wie diese codierten Zustände im Takt einer Abtastrate des Abstandssensors 18 mit Zeitstempeln 30 versehen werden und als Zwischenergebnisse 32 vom Fahrerassistenzsystem 12 zwischengespeichert werden.

Zeitgleich werden die Lenkmomentdaten 16 mit denselben Zeitstempeln 30 versehen und als Zwischenergebnisse 34 vom Fahrerassistenzsystem 12 zwischengespeichert.

In einem weiteren Schritt erfolgt dann eine Verknüpfen der Zwischenergebnisse 34 mit den Zwischenergebnissen 32. Dabei wird den Lenkmomentdaten 16 für jeden Zeitraum, der zwischen jeweils zwei aufeinanderfolgenden Zeitstempeln 30 gebildet wird, die logische Codierung der Abstandsdaten 20 zugeordnet, die für denselben Zeitraum vorliegt. Im Ergebnis 36 werden die Zeitstempel 30 somit eliminiert. Dabei verbleiben mit den ursprünglichen Zeiträumen korrespondierende Lenkmomentdaten 16, denen jeweils eine logische Eins zugeordnet ist, wenn die Lenkmomentdaten 16 mit einer Hands-off-Situation korrespondieren oder denen eine logische Null zugeordnet ist, wenn die Lenkmomentdaten 16 nicht mit einer Hands-off-Situation korrespondieren.

Diese Ergebnisse 36 werden vom Fahrerassistenzsystem 12 als gelabelte Lenkmomentdaten 38 gespeichert. Die gelabelten Lenkmomentdaten 38 bilden Trainingsdaten 40, die wie nachfolgend noch näher beschrieben verwendet werden können.

Die Trainingsdaten 40 können von dem Fahrerassistenzsystem 12 auf einem Datenträger 42 gespeichert werden.

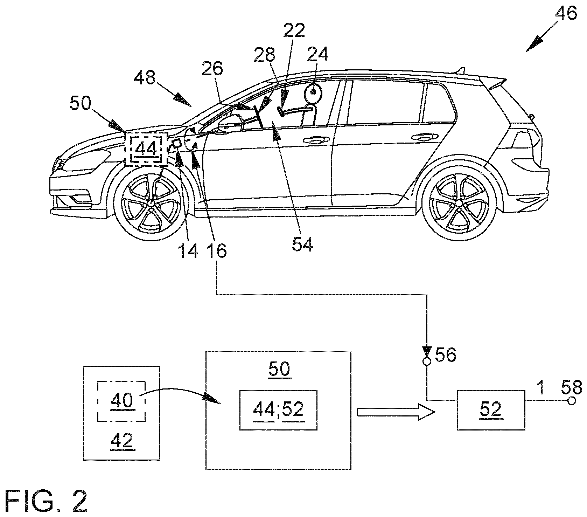

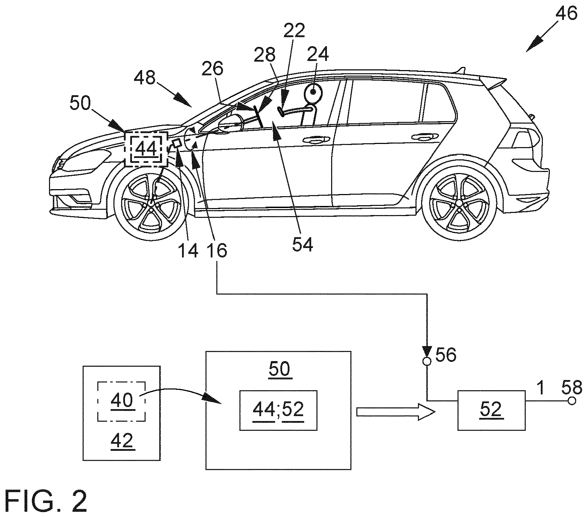

Die Trainingsdaten 40 dienen dazu, ein Fahrerassistenzsystem 12, 48 (vergleiche Figur 2), das beispielsweise wie zuvor beschrieben ausgebildet sein kann oder auch ohne Abstandssensor 18 ausgebildet sein kann, auf Basis eines lernfähigen Algorithmus 44 (vergleiche Figur 2) zu trainieren.

Figur 2 zeigt ein weiteres erfindungsgemäßes Fahrzeug 46 mit einem erfindungsgemäßen Fahrerassistenzsystem 48. Das Fahrzeug 46 unterscheidet sich von dem Fahrzeug 10 dadurch, dass das Fahrerassistenzsystem 48 keinen Abstandssensor aufweist.

Allerdings umfasst das Fahrerassistenzsystem 48 den lernfähigen Algorithmus 44, der in anderen Ausführungsbeispielen auch in dem Fahrerassistenzsystem 12 vorgesehen sein kann. In den hier beschriebenen Beispielen dient das Fahrerassistenzsystem 12 der Erstellung der Trainingsdaten 40 und das Fahrerassistenzsystem 48 verwendet diese, wie nachstehend beschrieben. Wenn das Fahrerassistenzsystem 12 ebenfalls den lernfähigen Algorithmus 44 umfasst, kann es die erstellten Trainingsdaten 40 beispielsweise gleich mit dem lernfähigen Algorithmus 44 testen. Das Vorgehen entspricht dabei analog dem nachstehend beschriebenen Verfahren.

Das Fahrerassistenzsystem 48 weist vorliegend ein Steuergerät 50 auf, auf dem der lernfähige Algorithmus 44 gespeichert beziehungsweise installiert ist.

Das Fahrerassistenzsystem 48 liest die Trainingsdaten 40 beispielsweise von dem Datenträger 42 aus und trainiert den lernfähigen Algorithmus 44 mit den Trainingsdaten 40, so dass ein trainierter lernfähiger Algorithmus 52 resultiert. Dies ist in dem Blockschema unterhalb des Fahrzeugs 46 angedeutet.

Mit dem Fahrerassistenzsystem 48 kann dann ein erfindungsgemäßes Verfahren durchgeführt werden, in dem auf Basis des trainierten lernfähigen Algorithmus 52 eine Hands-off-Situation 54 in dem Fahrzeug 46 erkannt wird.

Dazu fährt das Fahrzeug 46 und das Fahrerassistenzsystem 48 erfasst während des Fahrens sensorisch wieder die Lenkmomentdaten 16.

Die Lenkmomentdaten 16 werden dem trainierten lernfähigen Algorithmus 52 als Eingabedaten 56 zur Verfügung gestellt.

Da der trainierte lernfähige Algorithmus 52, wie zuvor beschrieben, trainiert worden ist, in den Lenkmomentdaten 16 Charakteristiken zu erkennen, die mit einer Hands-off-Situation korrespondieren, kann der trainierte lernfähige Algorithmus 52 als Ausgabedaten 58 entsprechend beispielsweise eine logische Eins ausgeben, wenn wie hier die Hands-off-Situation 54 vorliegt. Andernfalls kann eine logische Null ausgegeben werden.

Die Aussage über das Vorliegen der Hands-off-Situation 54 kann dann auf vielfältige Weise weiterverarbeitet werden. Beispielsweise kann ein Warnsignal ausgegeben werden oder eine automatische Lenkung aktiviert werden.

In den vorliegend beschriebenen Beispielen eignet sich das Fahrzeug 10 insbesondere zur automatisierten Erstellung der Trainingsdaten 40, mit anderen Worten als Entwicklungsfahrzeug. Das Fahrzeug 46 eignet sich besonders gut als Endprodukt, in dem auf den Abstandssensor 18 verzichtet werden kann und nur noch die Funktionalität zur Erkennung von Hands-off-Situationen im Fahrbetrieb genutzt wird.

### Bezugszeichenliste

- 10: Fahrzeug
- 12: Fahrerassistenzsystem
- 14: Lenkmomentsensor
- 16: Lenkmomentdaten
- 18: Abstandssensor
- 20: Abstandsdaten
- 22: Hände
- 24: Fahrer
- 26: Lenkrad
- 28: Oberfläche
- 30: Zeitstempel
- 32: Zwischenergebnis
- 34: Zwischenergebnis
- 36: Ergebnis
- 38: gelabelte Lenkmomentdaten
- 40: Trainingsdaten
- 42: Datenträger
- 44: lernfähiger Algorithmus
- 46: Fahrzeug
- 48: Fahrerassistenzsystem
- 50: Steuergerät
- 52: trainierter lernfähiger Algorithmus
- 54: Hands-off-Situation
- 56: Eingabedaten
- 58: Ausgabedaten

## Patentansprüche

1. Verfahren zur Erstellung von Trainingsdaten (40), die geeignet sind, ein Fahrerassistenzsystem (12; 48) auf Basis eines lernfähigen Algorithmus (44) zur Erkennung einer Hands-off-Situation (54) in einem Fahrzeug (10; 46) zu trainieren, umfassen folgende Schritte:
- Fahren eines Fahrzeugs (10), das mit einem Fahrerassistenzsystem (12) ausgestattet ist, das während des Fahrens sensorisch Lenkmomentdaten (16) erfasst und zusätzlich zumindest Abstandsdaten (20) von Händen (22) eines Fahrers (24) zum Lenkrad (26) erfasst;
- Erkennung von Hands-off-Situationen (54) zumindest aus den gemessenen Abstandsdaten (20);
- Verknüpfen der erkannten Hands-off-Situationen (54) mit den Lenkmomentdaten (16) im Zeitraum der erkannten Hands-off-Situationen (54), um gelabelte Lenkmomentdaten (38) als Trainingsdaten (40) zu erstellen.

2. Verfahren nach Anspruch 1, **dadurch gekennzeichnet, dass** zur Erfassung der Abstandsdaten (20) ein kapazitiver Abstandssensor (18) verwendet wird.

3. Verfahren nach einem der vorhergehenden Ansprüche, **dadurch gekennzeichnet, dass** zur Erkennung der Hands-off-Situationen (54) zusätzliche Daten herangezogen werden, aus der Gruppe: Lenkradbewegungsdaten; Fahrbahnverlaufsdaten; Spurerkennungsdaten; Fahrzeugbewegungsdaten.

4. Datenträger (42), auf dem Trainingsdaten (40), hergestellt in einem Verfahren nach einem der Ansprüche 1 bis 3, gespeichert sind.

5. Verfahren zum Trainieren eines lernfähigen Algorithmus (44), in dem Trainingsdaten (40), hergestellt in einem Verfahren nach einem der Ansprüche 1 bis 3 oder gespeichert auf einem Datenträger (42) nach Anspruch 4, verwendet werden.

6. Datenträger, auf dem ein lernfähiger Algorithmus (52) gespeichert ist, der in einem Verfahren nach Anspruch 5 trainiert worden ist.

7. Verfahren zum Betrieb eines Fahrerassistenzsystems (12; 48), in dem auf Basis eines lernfähigen Algorithmus (44) eine Hands-off-Situation (54) in einem Fahrzeug (10; 46) erkannt wird, umfassen folgende Schritte:
- Fahren eines Fahrzeugs (10; 46), das mit einem Fahrerassistenzsystem (12; 48) ausgestattet ist, das während des Fahrens sensorisch Lenkmomentdaten (16) erfasst;
- Erkennung von Hands-off-Situationen (54) aus den gemessenen Lenkmomentdaten (16) unter Verwendung eines trainierten lernfähigen Algorithmus (52),
**dadurch gekennzeichnet, dass** der trainierte lernfähige Algorithmus (52)
- anhand von Trainingsdaten (40), hergestellt in einem Verfahren nach einem der Ansprüche 1 bis 3, trainiert worden ist; oder
- unter Verwendung eines Datenträgers (42) nach Anspruch 4 trainiert worden ist; oder
- in einem Verfahren nach Anspruch 5 trainiert worden ist; oder
- auf einem Datenträger nach Anspruch 6 gespeichert ist.

8. Fahrerassistenzsystem (12), ausgebildet zur Durchführung eines Verfahrens nach einem der Ansprüche 1 bis 3 oder zur Erstellung eines Datenträgers (42) nach Anspruch 4 oder zur Durchführung eines Verfahrens nach Anspruch 5 oder zur Erstellung eines Datenträgers nach Anspruch 6.

9. Fahrerassistenzsystem (48), ausgebildet zur Durchführung eines Verfahrens nach Anspruch 7.

10. Fahrzeug (10; 46), umfassend ein Fahrerassistenzsystem (12; 48) nach Anspruch 8 oder 9.
